Europäisches Patentamt

**European Patent Office**

Office européen des brevets

(19)

(11) Publication number: **0 103 349**
A1

## (12) EUROPEAN PATENT APPLICATION

(21) Application number: **83303007.5**

(22) Date of filing: **25.05.83**

(51) Int. Cl.³: **F 16 K 17/04, G 05 D 16/10**

(30) Priority: **12.08.82 US 407319**

(43) Date of publication of application: **21.03.84**
Bulletin 84/12

(84) Designated Contracting States: **DE FR GB IT NL**

(71) Applicant: **GENERAL MOTORS CORPORATION,**
General Motors Building 3044 West Grand Boulevard,
Detroit Michigan 48202 (US)

(72) Inventor: **Schuster, David Anthony, 35611 Ash Road, New**
**Boston Michigan 48164 (US)**

(74) Representative: **Breakwell, John Neil Bower et al, GM**
**Patent Section Luton Office (F6) P.O. Box No. 3 Kimpton**
**Road, Luton Beds. LU2 0SY (GB)**

(54) Variable pressure control valve.

(57) A pressure control valve 12 includes a system relief valve 14 and a system regulator valve 16. The system relief valve includes a spring-loaded ball 18 which co-operates with a seat 20 and is subject to the action of an external mechanical bias element 62 to control the pressure setting thereof. The spring 22 also acts on the system regulator valve such that the pressure setting thereof changes with the pressure setting of the system relief valve. The system relief valve is always set to a pressure value higher than the system regulator valve, and operates only in response to a significant pressure overloading if the system regulator valve should be inoperable. The system regulator valve can include one or more bias chambers 78, 86 to which bias pressure signals can be communicated to provide a wider separation between the relief and regulated pressure settings if desired.

## VARIABLE PRESSURE CONTROL VALVE

This invention relates to a variable pressure control valve.

In automatic transmissions utilizing hydraulic control systems, it is the general practice to provide a system relief valve and a pressure regulator valve. These are usually separate and distinct valves. The system relief valve is generally a spring-loaded ball type valve which is designed to be operable at a single pressure setting significantly above the maximum pressure obtainable at the pressure regulator valve. The pressure regulator valve is generally a spool-type valve which may be operated on by various bias pressures to provide a variable pressure range utilized in the operation of the transmission. If for some reason the pressure regulator valve should become inoperable and remain closed, the control pump must operate at the pressure established by the system relief valve, thus increasing the power needed to operate the hydraulic control system. It will also be found by examining conventional hydraulic control systems that the system relief valve and the system regulator valve are disposed at separate locations, such that internal machining is required for both valves and separate spring elements are needed for the respective valves.

In US-A-4,302,937 (Aubert) there is disclosed a variable pressure control valve having a first regulator valve mechanism including a ball and seat mechanism with a fluid inlet disposed in the seat mechanism and with the ball being responsive to inlet pressure, a second regulator valve mechanism including a valve block and a spool valve element with a pressure-regulating area responsive to fluid pressure

2          0103349

to move the spool valve to bypass fluid through the valve block, and a single spring means disposed between the ball and the spool valve for urging the ball on to the seat mechanism in opposition to inlet pressure and counteracting the pressure-regulating area on the spool valve element.

The present invention is concerned with a variable pressure control valve capable of providing two separate pressure levels in its variable pressure regulator mode.

For this purpose a variable pressure control valve in accordance with the present invention is characterised in that the seat mechanism is movable to vary the force in the single spring means for controlling and varying the regulated pressure values  of both of the regulator valve mechanisms.

In such a variable pressure control valve, the system relief valve and the system regulator valve can thus be varied simultaneously by a single bias member.

The control of the system relief valve and the system regulator valve by a single spring allows simultaneous adjustment of the pressure setting for both valves.

The seat mechanism of the system regulator valve may accordingly be operated on by an external bias to control the force in the spring member for simultaneous adjustment of both the regulator valve and the relief valve.

In a preferred form of variable pressure control valve in accordance with the present invention, the system relief valve and the system regulator valve are both operable over the desired pressure range for the control system. The control settings of the control valve are interrelated by a single spring element which is operable to establish the minimum pressure differential between the relief valve and the regulator valve. The relief valve is a spring-loaded ball type valve and the regulator valve is a sliding spool type valve. The ball valve includes a ball seat which is connected to the system pump and provides an inlet passage for the relief valve. The ball seat is movable by an external bias member to control the spring load and therefore the system relief pressure setting. The spool valve includes a pressure regulating area which is larger than the area of the ball seat, such that the spool valve will regulate at a pressure level below the pressure required to operate the ball valve for any external bias force level. The system regulator valve can include one or more bias chambers which can be pressurised to increase the differential between regulator valve operation and relief valve operation.

In the drawing:

Figure 1 is a longitudinal section, with parts in elevation and shown schematically, of a preferred embodiment of a variable pressure control valve in accordance with the present invention; and

Figure 2 is  a similar sectional view of another embodiment of a  variable pressure control valve in accordance with the present invention.

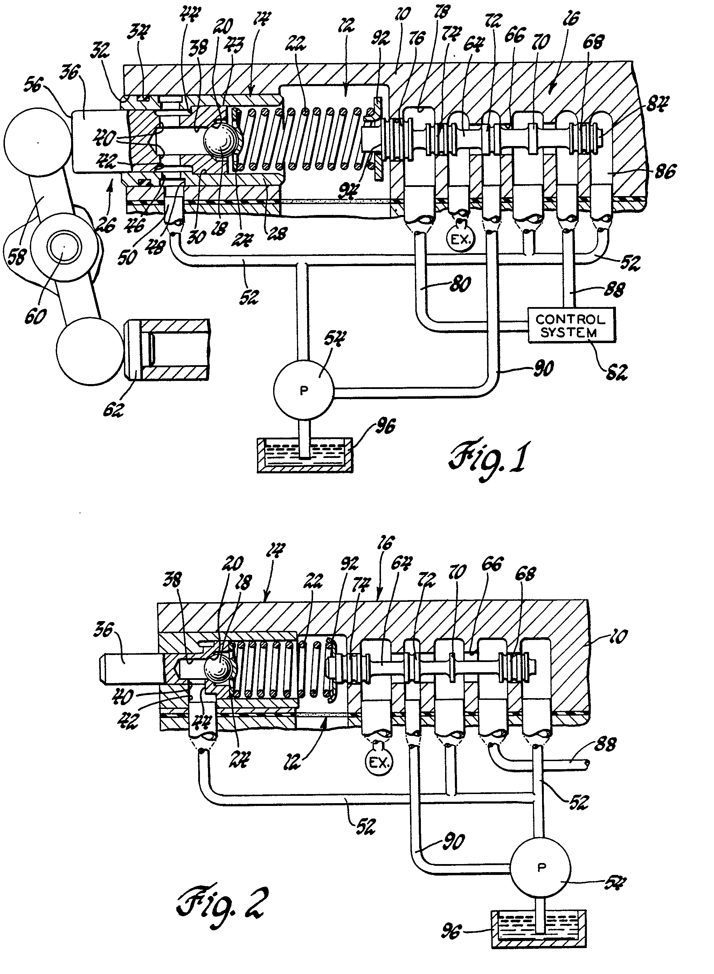

In Figure 1 of the drawing there is shown a housing 10 that encloses a variable pressure control valve, which is generally designated 12 and includes a system relief regulator valve 14 and a system control regulator valve 16. The system relief regulator valve 14 will hereinafter be termed a relief valve and the system regulator control valve 16 will hereinafter be termed a regulator valve.

The relief valve 14 includes a ball member 18 which is maintained on a ball seat 20 by a helical compression spring 22 acting through a spring seat 24. The ball seat 20 is formed in a seat mechanism which is generally designated 26 and includes a sleeve 28 having a stepped inner diameter 30. The sleeve 28 is slidably disposed in a bore 32 formed in the housing 10, and has fitted therein an annular sealing ring 34 which prevents fluid leakage to the atmosphere.

The seat mechanism 26 also includes a plunger 36 which has formed therein an axial passage 38 communicating with the ball seat 20, and a radial cross passage 40 which communicates with the passage 38 and with an annular fluid chamber 42. The plunger 36 has a stepped outer diameter 43 with the larger portion thereof slidably disposed in the large portion of the stepped diameter 30 and the smaller portion thereof slidably disposed in the smaller portion of the stepped diameter 30.

A differential area 44 formed by the stepped outer diameter 43 of the plunger 36 is in fluid communication with the annular fluid chamber 42. The annular fluid chamber 42 is also in communication through a radial passage 46 and an annular passage 48 with a port 50. The passages 46 and 48 are formed in the sleeve 28, and the port 50 is formed in the housing 10. The port 50 is in fluid communication by way of a passage 52 with a conventional hydraulic pump 54, which is preferably of the variable-displacement type.

The end face 56 of the plunger 36 is subject to the action of a lever 58 which is pivotally mounted at 60. The lever 58 is operated by an external mechanical bias element 62, which can be connected to an engine throttle mechanism, or, if the control valve 12 is used with an adjustable pulley type of variable transmission, the bias element 62 can be connected to one of the variable pulley members. In the latter instance, the external mechanical bias force will be proportional to the transmission ratio between the pulley members.

The regulator valve 16 includes a spool valve element 64 which is slidably disposed in a stepped bore 66 formed in the valve housing 10. The regulator valve 16 has four equal-diameter lands 68, 70, 72 and 74, and one larger-diameter land 76. The differential area between the lands 74 and 76 is in fluid communication with a pressure bias chamber 78 which is connected by way of a passage 80 to a conventional transmission control system 82. The right-hand end 84 of the land 68 is in communication with a pressure bias chamber 86 which is in fluid communication with the passage 52 and therefore with the pump 54. The passage 52 is also in fluid communication with the area between the lands 68 and 72 whenever the valve spool 64 is in the position shown. In this position, the pressure in the passage 52 is open between the lands 68 and 70 to a passage 88 which is connected to the control system 82. The stepped bore 66 is in fluid communication by way of a passage 90 with the pump 54 so as to provide a volume-decrease bias to the variable-displacement pump. Thus, whenever fluid pressure is connected to the passage 90, the displacement of the pump 54 will decrease such that excess fluid flow will not be delivered to the control system.

As is shown in Figure 1, the passage 90 is controlled by the valve land 72. If the fluid pressure in the bias chamber 86 should rise sufficiently, the valve spool element 64 will move leftwardly to permit fluid communication from the passage 52 and between the lands 70 and 72 to the passage 90, to therefore bias the pump towards a position of less displacement.

Leftward movement of the valve spool element 64 is inhibited by the spring 22, which acts by way of a valve seat 92 on the left-hand end 94 of the valve spool element 64. Should the pressure in the bias chamber 86 decrease, the spring 22 would enforce rightward movement of the valve spool element 64, thereby connecting the passage 90 to exhaust between the lands 72 and 74, such that pump displacement would increase accordingly.

The passage 80 can be supplied with any of the conventional bias signals utilized in transmission control mechanisms. Such signals are governor or speed-regulated signals or a specific drive range signal. The pressure in the chamber 78 operates on the differential area between the lands 74 and 76 to urge leftward movement of the valve spool element 64 and a decrease in the regulated control pressure in the passage 52. This bias force does not significantly affect the pressure setting of the relief valve 14.

The pressure setting of the relief valve 14 is controlled by the cross-sectional opening area of the ball seat 20 and the force in the spring 22. Temporarily ignoring the bias chamber 78, the pressure setting of the regulator valve 16 is determined by the cross-sectional area of the land 84 and the force of the spring 22. The pressure settings of the relief valve 14 and the regulator valve 16 can be designed to have a predetermined pressure differential by appropriate selection of the cross-sectional areas of both the seat 20 and the land 84. This differential for the pressure settings can be widened by the introduction of bias pressure to the chamber 78.

The pressure in the axial passage 38 creates a leftward bias on the plunger 36 which would normally be transmitted through the lever 58 to the external mechanical bias element 62. This leftward reaction force is compensated by the differential area 44, which is subject to the same pressure as that available in the passage 38 and creates a rightward force on the plunger 36. Thus the mechanical bias element does not have to be adjusted or designed to absorb the internal fluid reaction force of the pressure control valve 12.

The valve mechanism shown in Figure 2 is similar to that just described in relation to Figure 1 with the exception that the pressure bias chamber 78 of the regulator valve 16 is omitted. This permits the valve spool 64 to be formed with four valve lands, 68 to 74, and the valve bore 66 to be formed with a single diameter. The plunger 36 is shown to be of slightly different external configuration and smaller in diameter; however, the operation is identical to that described for Figure 1. It is seen that the ball 18 is held on its seat 20 by a spring 22 acting by way of the spring seat 24. The spring 22 also acts by way of a spring seat 92 on the end of the valve land 74. The operation of the two valves is identical to the operation just described in relation to Figure 1.

With the plunger configuration shown in Figure 2, the passage 38 communicates by way of a single radial passage 40 with the annular chamber 42, which is in fluid communication with the differential area 44. The regulator valve 16 shown in Figure 2 operates to control a variable-displacement pump 54 as described above for Figure 1.

In both instances, should it be desirable to use a fixed-displacement pump, the passage 90 would be connected to the system reservoir 96, such that all excess fluid would be returned to the reservoir.

If desirable, the external mechanical bias element 62 can act directly on the plunger 36, without the use of the lever 58.

Claims:

1.  A variable pressure control valve having a first regulator valve mechanism (14) including a ball (18) and seat mechanism (20) with a fluid inlet (40, 42) disposed in the seat mechanism and with the ball being responsive to inlet pressure, a second regulator valve mechanism (16) including a valve block (10) and a spool valve element (64) with a pressure-regulating area (76-74) responsive to fluid pressure to move the spool valve to bypass fluid through the valve block, and a single spring means (22) disposed between the ball and the spool valve for urging the ball on to the seat mechanism in opposition to inlet pressure and counteracting the pressure-regulating area on the spool valve element, characterised in that the seat mechanism (20) is movable to vary the force in the single spring means (22) for controlling and varying the regulated pressure values of both of the regulator valve mechanisms (14 and 16).

2.  A variable pressure control valve according to claim 1, characterised in that the inlet pressure acts on the opening area of the ball seat mechanism (20), and the pressure-regulating area on the spool valve element (64) is larger than the opening area of the ball seat mechanism, whereby the second regulator valve mechanism (16) will be operable to a pressure level having a value less than the pressure level required to open the first regulator valve mechanism (14).

Fig. 1

Fig. 2

0103349

**European Patent Office**

**EUROPEAN SEARCH REPORT**

| | DOCUMENTS CONSIDERED TO BE RELEVANT | | EP 83303007.5 |

| Category | Citation of document with indication, where appropriate, of relevant passages | Relevant to claim | CLASSIFICATION OF THE APPLICATION (Int. Cl. ³) |
|---|---|---|---|
| A,D | <u>US - A - 4 302 937</u> (AUBERT)<br>* Totality *<br>-- | 1 | F 16 K 17/04<br>G 05 D 16/10 |
| A | <u>US - A - 4 055 197</u> (RAYMOND)<br>* Column 3, line 50 - column 4, line 20; fig. 3 *<br>-- | 1 | |
| A | <u>DE - A1 - 2 359 755</u> (R. BOSCH GMBH)<br>* Totality *<br>---- | 1 | |

**TECHNICAL FIELDS SEARCHED (Int. Cl. ³)**

G 05 D 16/00
F 16 K 17/00
F 15 B 13/00

The present search report has been drawn up for all claims

| Place of search<br>VIENNA | Date of completion of the search<br>23-11-1983 | Examiner<br>ROUSSARIAN |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82